# EUROPEAN PATENT APPLICATION

(11) **EP 4 796 771 A1**
(43) Date of publication of application: **26.08.2026**
(21) Application number: 26163718.5
(22) Date of filing: 19.05.2023
(51) Int. Cl.: F02C 3/10, F02C 3/22, F02C 3/30, F02K 3/06

(54) **HYDROGEN FUELED TURBINE ENGINE CONDENSER DUCT**

(30) Priority: 19.05.2022 US 202263343647 P
(62) Document number(s) of the earlier application(s) in accordance with Art. 76 EPC: 23174394.9 / 4 279 718
(71) Applicant: RTX Corporation, Farmington, CT 06032 (US)
(72) Inventor: STAUBACH, Joseph B., New Britian, 06053 (US); SOBANSKI, Jon Erik, Glastonbury, 06415 (US)
(74) Representative: Dehns

(57) **Abstract**

A propulsion system for an aircraft including a gas generating core engine (70) that generates an exhaust gas flow (52) that is expanded through a turbine section (32). A power turbine (38) engine is forward of the core engine (70). A propulsor (22) is coupled to the power turbine (38). A hydrogen fuel system (96) supplies hydrogen fuel to the combustor (30) through a fuel flow path (80). A condenser (62) extracts water (54) from the exhaust gas flow (52). An evaporator (64) receives a portion of the water (54) that is extracted by the condenser (62) and generates a steam flow (56). The steam flow (56) is injected into the core flow path (C) upstream of the turbine section (32). An inlet duct (66) communicates an inlet airflow (48) to the compressor section (24) aft at a location aft of the turbine section (32). An exhaust duct (68) routes exhaust gas flow (52) through the condenser (62) and into thermal communication with a water flow (86) of water (54) extracted in the condenser (62) in the evaporator (64).

## Description

### TECHNICAL FIELD

The present invention relates generally to a hydrogen powered aircraft propulsion system and, more particularly to a hydrogen steam injected and intercooled turbine engine.

### BACKGROUND

Reduction and/or elimination of carbon emissions generated by aircraft operation is a stated goal of aircraft manufacturers and airline operators. Gas turbine engines compress incoming core airflow, mix the compressed airflow with fuel that is ignited in a combustor to generate a high energy exhaust gas flow. Some energy in the high energy exhaust flow is recovered as it is expanded through a turbine section. Even with the use of alternate fuels, a large amount of energy in the form of heat is simply exhausted from the turbine section to atmosphere. The lost heat reduces the overall efficiency of the engine
Turbine engine manufacturers continue to seek further improvements to engine performance including improvements to reduce environmental impact while improving propulsive efficiencies.

### SUMMARY

A propulsion system for an aircraft according to an aspect of this invention, among other possible things includes a gas generating core engine that includes a core flow path where a core airflow is compressed in a compressor section, communicated to a combustor section, mixed with a hydrogen based fuel and ignited to generate an exhaust gas flow that is expanded through a turbine section. A power turbine engine is forward of the core engine. A propulsor is coupled to the power turbine. A hydrogen fuel system is configured to supply hydrogen fuel to the combustor through a fuel flow path. A condenser is arranged along the core flow path and is configured to extract water from the exhaust gas flow. An evaporator is arranged along the core flow path and is configured to receive a portion of the water that is extracted by the condenser to generate a steam flow. The steam flow is injected into the core flow path upstream of the turbine section. An inlet duct communicates an inlet airflow to the compressor section aft at a location aft of the turbine section. An exhaust duct routes exhaust gas flow through the condenser and into thermal communication with a water flow of water extracted in the condenser in the evaporator.

Optionally, and in accordance with the above, the inlet duct includes an inlet opening that is disposed aft of the evaporator.

Optionally, and in accordance with any of the above, the condenser is disposed aft of the evaporator.

Optionally, and in accordance with any of the above, the exhaust duct includes an exhaust inlet that receives exhaust flow that exits the evaporator. The exhaust inlet is disposed engine forward of the inlet opening of the inlet duct.

Optionally, and in accordance with any of the above, the exhaust inlet is engine forward of the core engine.

Optionally, and in accordance with any of the above, the evaporator is disposed parallel to an engine longitudinal axis and the exhaust flow through the evaporator is transverse to the engine longitudinal axis.

Optionally, and in accordance with any of the above, the condenser is disposed at an angle relative to the engine longitudinal axis that is less than 90 degrees and greater than 0.

Optionally, and in accordance with any of the above, the turbine section of the core engine is engine forward of the compressor section and an inlet duct communicates inlet air to the compressor section.

Optionally, and in accordance with any of the above, the evaporator is disposed within an axial space forward of the power turbine.

Optionally, and in accordance with any of the above, the condenser is in thermal communication with a cold sink.

Optionally, and in accordance with any of the above, the propulsion system includes an intercooling system to cool portions of the core airflow in the compressor section. The intercooling system is configured to inject water that is communicated from the condenser into the compressor section.

Optionally, and in accordance with any of the above, the propulsion system includes a cooled cooling air passage that communicates core flow from the compressor section to the turbine section. A heat exchanger is disposed to cool the core flow with water from the condenser.

Optionally, and in accordance with any of the above, the steam flow from the evaporator is injected into the combustor.

Optionally, and in accordance with any of the above, the propulsion system includes a gearbox that is coupled to the power turbine. The power turbine is configured to drive the propulsor section through the gearbox.

Optionally, and in accordance with any of the above, the power turbine engine is rotatable independent of the turbine section. The exhaust gas flow is communicated engine forward from the turbine section to the power turbine.

Although the different examples have the specific components shown in the illustrations, embodiments of this invention are not limited to those particular combinations. It is possible to use some of the components or features from one of the examples in combination with features or components from another one of the examples.

These and other features disclosed herein can be best understood from the following specification and drawings, the following of which is a brief description.

### BRIEF DESCRIPTION OF THE DRAWINGS

Figure 1 is a schematic view of an example propulsion system embodiment.
Figure 2 is a simplified schematic view of the example propulsion system embodiment.

### DETAILED DESCRIPTION

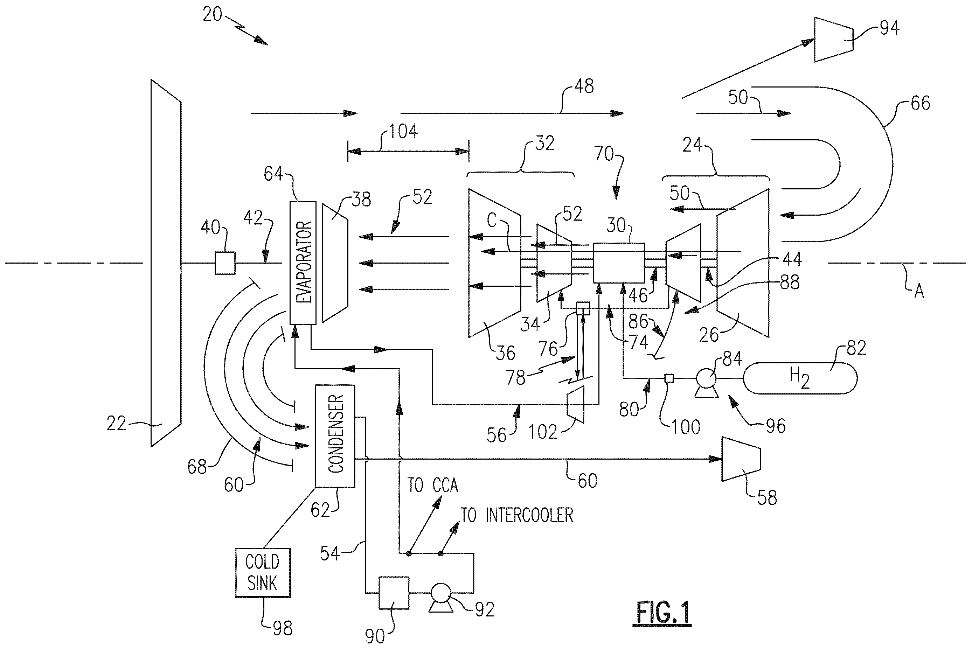

Figure 1 schematically illustrates an example reverse flow hydrogen steam injected inter-cooled turbine engine that is generally indicated at 20. The engine 20 includes a gas generating core engine 70 with a core airflow path C through a compressor section 24, a combustor 30 and a turbine section 32 arranged along an engine longitudinal axis A. The turbine section 32 is engine forward of the compressor section 24 and the combustor 30. A power turbine 38 is spaced apart from the turbine section and receives exhaust gas flow 52 from the gas generating core engine 70. The gas flow 52 expands through power turbine 38 to drive a drive shaft 42. The drive shaft 42 drives a propulsor 22 positioned engine-forward of the rest of the engine 20. In this disclosed embodiment, the propulsor 22 is fan driven by the drive shaft 42 through a speed reduction gearbox 40.

The fan 22 drives inlet air into an inlet duct 66 that is communicated to the compressor section 24. A core airflow 50 is communicated through the inlet duct 66 into the compressor section 24. A bypass flow 48 is communicated around and past the core engine 70.

In the compressor section 24, the core flow 50 is compressed and communicated engine forward to the combustor 30. In the combustor 30, the core flow 50 is mixed with a hydrogen (H₂) fuel flow 80 and ignited to generate the high energy exhaust gas flow 52 that expands through the turbine section 32 where energy is extracted and utilized to drive the compressor section 24. The exhaust gas flow 52 exhausted from the turbine section 32 of the gas generating core engine 70 is communicated to the power turbine 38.

The power turbine 38 drives the drive shaft 42 that drives the fan 22. In this disclosed embodiment, the fan 22 is driven through a gearbox 40 at a speed different than the power turbine 38. It should be appreciated, that the fan 22 may be driven directly by the power turbine 38 at a speed different than the turbine section 32. The power turbine 38 may be configured to drive the fan 22 at a speed different than the turbine section 32 because it is not coupled to the gas generating core engine 70 and is not required to drive any portion of the compressor section 24. The bypass flow 48 may bypass the core engine 70 and exit through a fan nozzle schematically shown at 94.

An exhaust duct 68 is provided to direct exhaust gas flow from the power turbine 38 to a condenser 62. The condenser 62 extracts water from the exhaust gas flow 52. From the condenser 62, expelled exhaust gases 60 are exhausted through a core nozzle 58. Water extracted from the condenser 62 is converted to steam and injected into the core engine 70 to increase mass flow and thereby provide increased output power.

The engine 20 is configured to burn hydrogen provide by a fuel system 96. The fuel system 96 includes a liquid hydrogen (LH₂) tank 82 in communication with at least one pump 84. The pump 84 drives a fuel flow 80 to the combustor 30. LH₂ provides a thermal heat sink that can be utilized to cool various heat loads within the aircraft or engine as schematically indicated at 100. The heat loads may include, for example and without limitation, super conducting electrics, a working fluid of an environmental control system of the aircraft, an air conditioning heat exchanger, and engine working fluid heat exchangers. Heat accepted into the hydrogen fuel flow increase the overall fuel temperature prior to injection into the combustor 30.

A steam flow 56 generated by evaporating water in an evaporator 64 extracted from the exhaust gas flow 52 by the condenser 62. The water is transformed to steam in the evaporator 64 with heat from the exhaust gas flow 52 and injected into the combustor 30. In one disclosed embodiment, the evaporator 64 is disposed after the power turbine 38. The evaporator 64 is thereby placed in thermal communication with the hot exhaust gas flow 52. Water extracted by the condenser 62 is communicated to the evaporator and converted to the steam flow 56 that is subsequently injected into the core engine 70.

The generated steam flow 56 may be injected into the core airflow 50 at the combustor 30 or just prior to the combustor 30 to improve performance by increasing mass flow and power output without additional work required by the compressor section 24. Steam flow 56 from the evaporator 64 may drive a steam turbine 102 to provide an additional work output prior to injection into the combustor 30.

The condenser 62 draws water, schematically indicated at 54, from the exhaust gas flow 52 and communicates the recovered water to water storage tank 90. The water storage tank 90 operates as an accumulator to provide sufficient water for operation during various engine operating conditions. The condenser 62 is in communication with a cold sink, schematically indicated at 98 that may be, for example, ram or fan air depending on the application and/or engine configuration.

The engine 20 has an increased power output from the injected steam 56 by increasing the mass flow through the turbine section 32 without a corresponding increase in work from the compressor section 24.

A water intercooling system 88 may provide a water flow 86 that is communicated to the compressor section 24 to reduce a temperature of the core airflow 50 and increase mass flow. The water flow 86 may also be used as a cooling flow 78 to cool cooling air flow 74 communicated from the compressor section 24 to the turbine section 32. A heat exchanger 76 provides for the transfer of heat from the cooling air flow 74 into water. The heat from the cooling air flow 74 may vaporize the water into steam.

The example compressor section 24 includes a low pressure compressor (LPC) 26 and a high pressure compressor (HPC) 28. The turbine section 32 includes a high pressure turbine (HPT) 34 and a low pressure turbine (LPT) 36. The turbines 34 and 36 are coupled to a corresponding compressor section. In this disclosed example, the high pressure turbine is coupled by a high shaft 46 to drive the high pressure compressor 28. A low shaft 44 couples the low pressure turbine 36 to the low pressure compressor 26.

A power shaft 42 is coupled to the power turbine 38 and the gearbox 40 to drive the fan 22. The example gearbox 40 is an epicyclical gear train, such as a planetary gear system, star gear system or other known gear system, with a gear reduction ratio of greater than about 2.3.

The additional power provided by the use of both hydrogen fuel and the injected steam flow 56 provides for the gas generating core engine 70 to be of a reduced size compared to engines of similar thrust capabilities. The smaller core engine 70 is further provided by the use of the power turbine 38. Because the power turbine 38 is not mechanically coupled to the core engine 70, it may be configured with respect to driving the fan 22 rather than both the fan 22 and some portion of the compressor section 24.

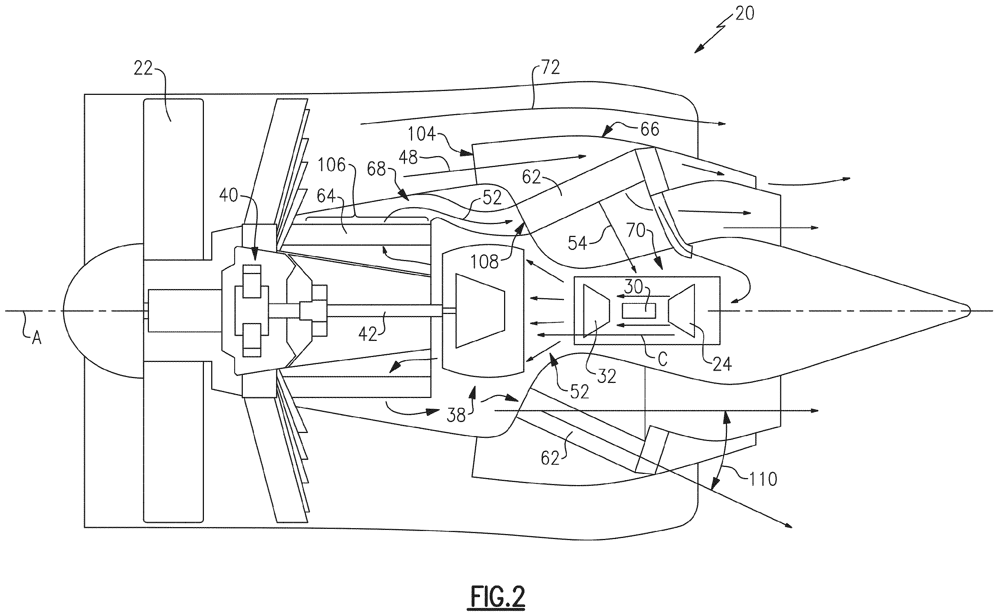

Referring to Figure 2, with continued reference to Figure 1, the example engine 20 is shown in a simplified schematic view to illustrate inlet and outlet ducting of core and exhaust flows relative to the core engine 70, power turbine 38, condenser 62 and the evaporator 64. Inlet airflow 48 is communicated to an aft location of the core engine 70 through the inlet duct 66. The aft location 70 is an inlet to the compressor section 24 (Figure 1). The inlet duct 66 communicates inlet airflow aft past a forward portion of the core engine 70 including the turbine section 32 and the combustor 30 to the compressor section 24.

In one disclosed example embodiment, the evaporator 64 is arranged parallel to the engine longitudinal axis A. The exhaust gas flow 52 flows in a direction parallel to the engine axis A through the power turbine 38. The exhaust duct 68 receives the exhaust gas flow 52 and turns it radially outward in a direction transverse to the engine axis A and through the evaporator 64.

The condenser 62 is disposed at an angle 110 relative to the engine axis A. In one disclosed example embodiment, the angle 110 is less than 90 degrees and greater than 0 degrees. In another example embodiment, the angle 110 is less than about 60 degrees and greater than 10 degrees. In yet another example embodiment the angle 110 is less than 45 degrees and greater than 20 degrees. In another example embodiment, the angle 110 is 30 degrees.

An outlet duct 68 communicates watercontaining exhaust gas flow 52 aft to the condensers 62. The example outlet duct 68 is arranged to provide thermal communication of the exhaust gas flow 52 and water 54 extracted by the condenser in the evaporator 64. The exhaust gas flow 52 and water 54 in the evaporator do not mix, but are in thermal communication such that water 54 is heated and transformed into the steam flow 56 (Figure 1).

The example inlet duct 66 and outlet duct 68 may be annular structures disposed about an engine axis. Alternatively, the inlet duct 66 and the outlet duct 68 may comprise a plurality of ducts that are arranged about the engine axis. Moreover, the inlet duct 66 and the exhaust duct 68 may be differently configured. For example, the inlet duct 66 may be a full annular duct that defines a passage for inlet airflow where the exhaust duct 68 comprises a plurality of ducts for directing the exhaust gas flow 52. Alternatively, the inlet duct 66 may be a plurality of ducts where the exhaust duct 68 is a full annular duct.

In one disclosed example, the inlet duct 66 for inlet air flow 48 includes an inlet opening 104. The example inlet opening 104 is disposed aft of the evaporator 64. The evaporator 64 is disposed engine forward of the condenser 62.

The example exhaust duct 68 includes an exhaust inlet 106. The exhaust inlet 106 receives the exhaust gas flow 52 as it exits the evaporator 64. Accordingly, in one disclosed example, the exhaust inlet 106 is disposed engine forward of the inlet opening 104 of the inlet duct 66.

The exhaust duct 68 further includes an outlet 108 that communicated the exhaust gas flow 52 from the evaporator 64 to the condenser 62. Accordingly, in one disclosed example embodiment, the outlet 108 of the exhaust is disposed axially even or aft of the inlet opening 104 of the inlet duct 68.

The disclosed inlet and exhaust ducting provide for the communication of thermal energy between flows and for the extraction of water for subsequent injection into the core engine 70 to provide desired increases in engine efficiencies.

Although an example engine configuration is described by way of example, it will be appreciated that other engine configurations may include additional structures and features and are within the contemplation and scope of this disclosure.

Accordingly, the disclosed assemblies provide for the advantageous use of hydrogen fuel to improve engine efficiency and reduce carbon emission. The disclosed systems use the advantageous thermal capacity of hydrogen to maximize the recapture of heat and cool other working flows of the engine.

Although an example embodiment has been disclosed, a worker of ordinary skill in this art would recognize that certain modifications would come within the scope of this disclosure. For that reason, the following claims should be studied to determine the scope and content of this disclosure.

## Claims

1. A propulsion system (20) for an aircraft, the propulsion system (20) comprising:
a gas generating core engine (70) including a core flow path (C) where a core airflow (50) is compressed in a compressor section (24), communicated to a combustor (30), mixed with a hydrogen fuel and ignited to generate an exhaust gas flow (52) that is expanded through a turbine section (32);
a power turbine (38) disposed engine-forward of the core engine (70);
a propulsor (22) coupled to the power turbine (38);
a hydrogen fuel system (96) configured to supply hydrogen fuel to the combustor (30) through a fuel flow path (80);
a condenser (62) arranged along the core flow path and configured to extract water (54) from the exhaust gas flow (52);
an evaporator (64) arranged along the core flow path (C) and configured to receive a portion of the water (54) extracted by the condenser (62) to generate a steam flow (56), wherein the steam flow (56) is injected into the core flow path (C) upstream of the turbine section (32);
an inlet duct (66) communicating an inlet airflow (48) to the compressor section (24) at a location aft of the turbine section (32); and
an exhaust duct (68) routing exhaust gas flow (60) exhausted from the evaporator (64) to the condenser (62).

2. The propulsion system (20) as recited in claim 1, wherein the inlet duct (66) includes an inlet opening (104) disposed engine-aft of the evaporator (64).

3. The propulsion system (20) as recited in claim 1 or 2, wherein the condenser (62) is disposed engine-aft of the evaporator (64).

4. The propulsion system (20) as recited in claim 2 or 3, wherein the exhaust duct (68) includes an exhaust inlet (106) receiving exhaust flow (52) exiting the evaporator (64), the exhaust inlet (106) disposed engine-forward of the inlet opening (104) of the inlet duct (66).

5. The propulsion system (20) as recited in claim 4, wherein the exhaust inlet (106) is engine-forward of the core engine (70).

6. The propulsion system (20) as recited in claim 4 or 5, wherein the evaporator (64) is disposed parallel to an engine longitudinal axis (A) and the exhaust flow (52) through the evaporator (64) is transverse to the engine longitudinal axis (A).

7. The propulsion system (20) as recited in claim 6, wherein the condenser (62) is disposed at angle (110) relative to the engine longitudinal axis (A) that is less than 90 degrees and greater than 0.

8. The propulsion system (20) as recited in any preceding claim, wherein the turbine section (32) of the core engine (70) is engine-forward of the compressor section (24).

9. The propulsion system (20) as recited in any preceding claim, wherein the evaporator (64) is disposed within an axial space that is engine-forward of the power turbine (38).

10. The propulsion system (20) as recited in any preceding claim, wherein the condenser (62) is in thermal communication with a cold sink (98).

11. The propulsion system (20) as recited in any preceding claim, including an intercooling system (88) to cool portions of the core airflow (50) in the compressor section (24), wherein the intercooling system (88) is configured to inject water (86) communicated from the condenser (62) into the compressor section (24).

12. The propulsion system (20) as recited in any preceding claim, including a cooled cooling air passage communicating core flow (50) from the compressor section (24) to the turbine section (32), wherein a heat exchanger (76) is disposed to cool the core flow (50) with water (78) from the condenser (62).

13. The propulsion system (20) as recited in any preceding claim, wherein the steam flow (56) from the evaporator (64) is injected into the combustor (30).

14. The propulsion system (20) as recited in any preceding claim, including a gearbox (40) coupled to the power turbine (38), wherein the power turbine (38) is configured to drive the propulsor (22) section through the gearbox (40).

15. The propulsion system (20) as recited in claim 14, wherein the power turbine (38) is rotatable independent of the turbine section (32), and the exhaust gas flow (52) is communicated engine-forward from the turbine section (32) to the power turbine (38).
